# EUROPEAN PATENT SPECIFICATION

(11) **EP 0 485 494 B1**
(45) Date of publication and mention of the grant of the patent: **03.09.1997**
(21) Application number: 90912544.5
(22) Date of filing: 31.07.1990
(51) Int. Cl.: H04Q 7/20, H04B 7/26

(54) **CELLULAR RADIO SYSTEM**
ZELLULARES FUNKSYSTEM
SYSTEME RADIO CELLULAIRE

(30) Priority: 31.07.1989 GB 8917452
(43) Date of publication of application: 20.05.1992
(73) Proprietor: TELECOM SECURICOR CELLULAR RADIO LIMITED, Slough SL1 4DX, Berkshire (GB)
(72) Inventor: KNIGHT, Phillip, Esher KT10 0BD (GB)
(74) Representative: Lidbetter, Timothy Guy Edwin
(86) International application number: GB9001183
(87) International publication number: WO9102436

(56) References cited:
- EP-A- 0 037 071
- EP-A- 0 171 596
- ELECTRONICS LETTERS no. 11, 26 May 88, STEVANAGE (GB) pages 670 - 672; W.C. WONG et al: "BLANK AND BURST TRANSMISSION OF DATA OVER ACTIVE SPEECH CHANNELS"
- 38th IEEE Vehicular Technology Conference, June 1988, Philadelphia, US, pages 30-37; W: Fuhrmann et al: "Radio Access Protocol of the new GSM Land Mobile Communication Standard"
- 38TH IEEE VEHICULAR TECHNOLOGY CONFERENCE June 1988, PHILADELPHIA (US) pages 57 - 64; H.P. STERN: "DESIGN ISSUES RELEVANT TO DEVELOPING AN INTEGRATED VOICE/ DATA MOBILE RADIO SYSTEM"
- THE TRANSACTIONS OF THE IECE OF JAPAN vol. E-68, no. 1, January 85, TOKYO (JP) pages 22 - 28; J: SEGUEL et al: "Voice-Data Hybrid Transmission Systems in 64kbits/sec Digital Lines"

## Description

The present invention relates to a cellular radio system.

It is well known that in a cellular radio system, bi-directional voice or data communication can take place between one of a number of fixed base stations and one or more mobile stations, within an area or cell served by that base station. When a mobile moves between adjacent cells, it is possible to handover or handoff a call from the current base station to the base station of the adjacent cell. A group of base stations are connected to a common mobile switching centre, which oversees handover. In handover, the current base station and the mobile need to exchange signalling information. This control signalling is necessarily concentrated into a short period of time, and because the voice or data transmission may need to be interrupted, albeit briefly, a user may perceive a deterioration in call quality. Other control signalling e.g. power control, takes place between a mobile and a base station throughout a call.

As more complex, digital, cellular radio systems, for example the Pan-European GSM system, are developed, the amount of control or background signalling required increases. This is because the overall aim is to improve the quality of the communication link and, in the case of voice telephony, this means the perceived quality of a telephone call to a user. As has already been pointed out, such background signalling can have exactly the opposite effect and reduce the perceived quality of a call.

In a known arrangement, discussed in an article by Wong and Goodman in "Electronics Letters" Vol 24 No 11 (26th May 1988) page 670-672, redundancy in the speech signal is exploited in order to reconstruct part of the speech signal which has been lost whilst the channel is used for signalling information. This system reduces the perceived loss of speech quality, but requires considerable processing power in the receiver to reconstruct the signal. Also, since it relies on the redundancy in speech signals it is not suitable for data signals.

The present invention seeks to provide a cellular radio system in which the disruption caused by signalling is alleviated.

According to one aspect the invention provides a base station for a cellular radio system for voice or data communication with mobile stations in its vicinity, characterised in having means for determining that communication between the base station and a mobile station has temporarily ceased, means for assessing the urgency of required signalling information, means for storing the required signalling information while communication continues, and means responsive to the determining means and the assessment means for initiating transmission of the stored required signalling information to the mobile station on the basis of the assessed degree of urgency of the information, or, if the required signal information has not been transmitted earlier on the basis of the assessed degree of urgency of the signalling information, during a determined temporary cessation in the communication.

Preferably, the base station has timing means for initiating transmission of a signalling information to a mobile station a predetermined period after receipt of the message by the base station.

Preferably, the means for assessing the degree of urgency has means for assessing a priority code contained in the signalling message.

Preferably, the means for assessing urgency has means for interpreting the signalling message to assess the intended function of the message, so that the degree of urgency of the message may be determined.

According to another aspect the invention provides a base station for a cellular radio system for connection to a mobile switching centre, so that a mobile station can make a call to a telephone network via the base station and the mobile switching centre, characterised in that the base station has means for assessing the urgency of a signalling message sent from the mobile switching centre for a mobile station during a call, means for storing the signalling message, means for assessing the state of communication with the mobile station to be signalled, and means for forwarding the stored signalling message on the basis of the assessed urgency from the base station to the mobile station or, if the signal message has not been sent earlier on the basis of the assessed degree of urgency of the signalling message, during an assessed period of silence in the call.

Preferably the base station has timing means for initiating transmission of a signalling message to a mobile station a predetermined period after receipt of the message by the base station.

Preferably the means for assessing the degree of urgency include means for assessing a priority code contained in the signalling message.

Preferably the means for assessing the degree of urgency has means for interpreting the signalling message to assess the intended function of the message, so that the urgency of the message may be determined.

The invention also extends to a cellular radio system having a plurality of base stations, at least one of which is in accordance with the statements above.

According to a further aspect the invention provides a method of signalling between a base station and a mobile station in a cellular radio system having a plurality of base stations, each for voice or data communication with mobile stations in its vicinity, the method comprising: assessing the urgency of required signalling information; holding required signalling information while voice or data communication continues; determining that communication between the base station and the mobile station has temporarily ceased; and initiating required signalling with the mobile station during a determined temporary cessation in the communication, unless the required signalling information has been sent earlier on the basis of the assessed degree of urgency of the required signalling information.

The present invention makes use, where possible, of the gaps or quiet periods in telephone calls to initiate signalling between a basestation and a mobile station.

A preferred embodiment of the invention will now be described by way of example, and with reference to the accompanying drawings wherein:-
- Figure 1 is a block schematic diagram showing in general terms the major parts of a cellular radio system;
- Figure 2 illustrates the principle of operation of a preferred embodiment of the invention;
- Figure 3 illustrates the time of signalling in a cellular system in conjunction with a fixed network; and
- Figure 4 is an algorithm for the procedures for implementing the preferred embodiment of the invention.

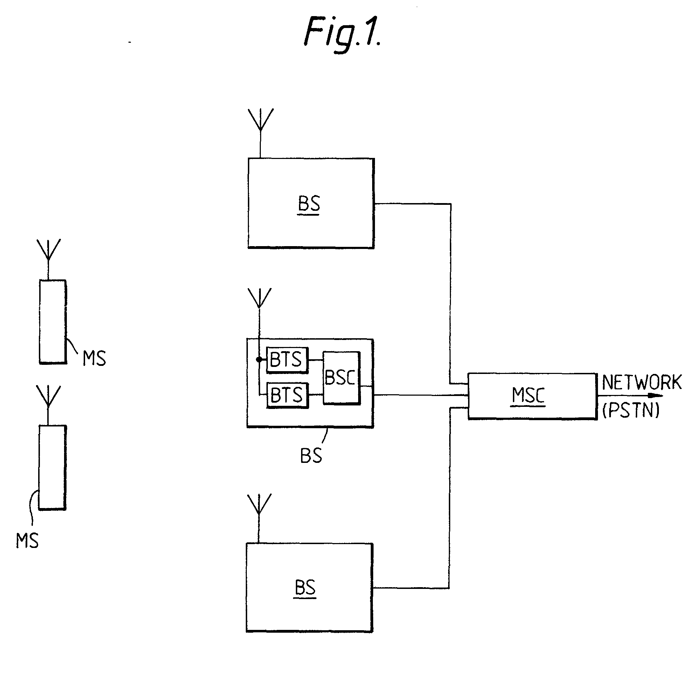

Referring to Figure 1, the components of a cellular radio system generally include, on the one hand, a number of mobile stations (MS) and, on the other hand, a number of base stations (BS) connected to one or more mobile switching centres (MSC) which are connected to a network, for example a PSTN. In the example shown, which relates to a cellular system to the GSM standard, the base stations B each have a number of base transceiver stations (BTS) connected to a common base site controller (BSC) which interfaces with the mobile switching centre(s) MSC. A more detailed description of the radio link (B-MS) (GSM Air interface) and fixed (MSC-B) interface (GSM interface "A") will be found in GSM recommendations. Such a cellular radio system is well known and will not be described in further detail.

Generally speaking, the base site controller (BSC) has functionality which controls the radio resources at detailed level. Specifically for present purposes, the base site controller, BSC:
- receives and transmits signalling messages from and to the mobile station MS via the BTS across the air interface and to and from the mobile switching MSC;
- interprets those signalling messages which are concerned with radio resource management, one of which is the handover command; and
- performs the necessary transcoding function between the air interface coding algorithm for speech and the "A" law coding defined for the "A" interface.

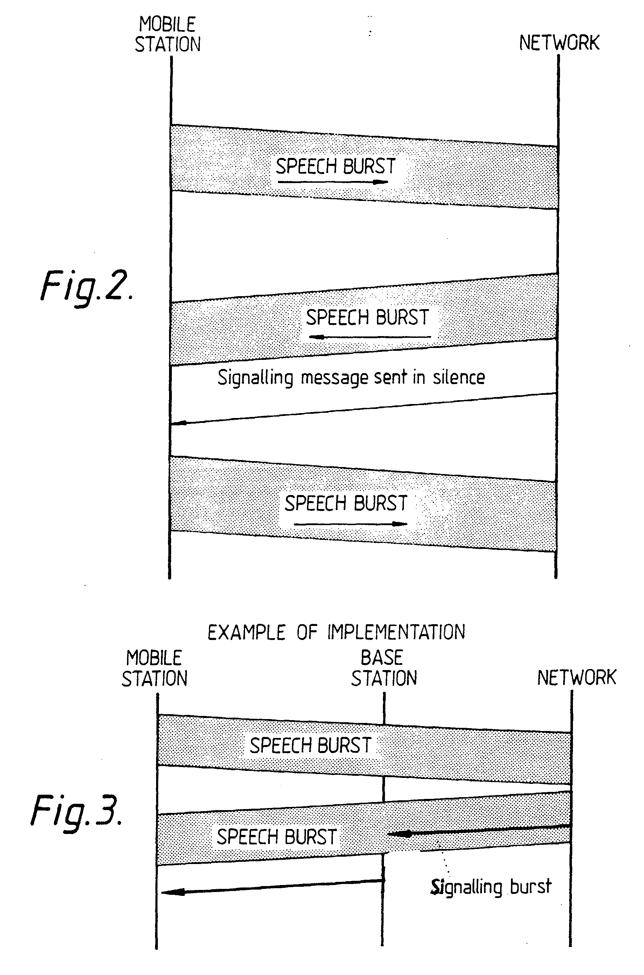

Referring to Figure 2, in a telephone conversation, speech occurs in bursts, with short periods of silence between them. The general principle of the preferred embodiment is whenever possible to inject signalling between the base and mobile stations into the periods between bursts of speech in a call, only interrupting speech if necessary. Figure 2 illustrates how these signalling events can be correlated with the speech activity. In this way, the signalling has a reduced effect on the perceived quality of a call.

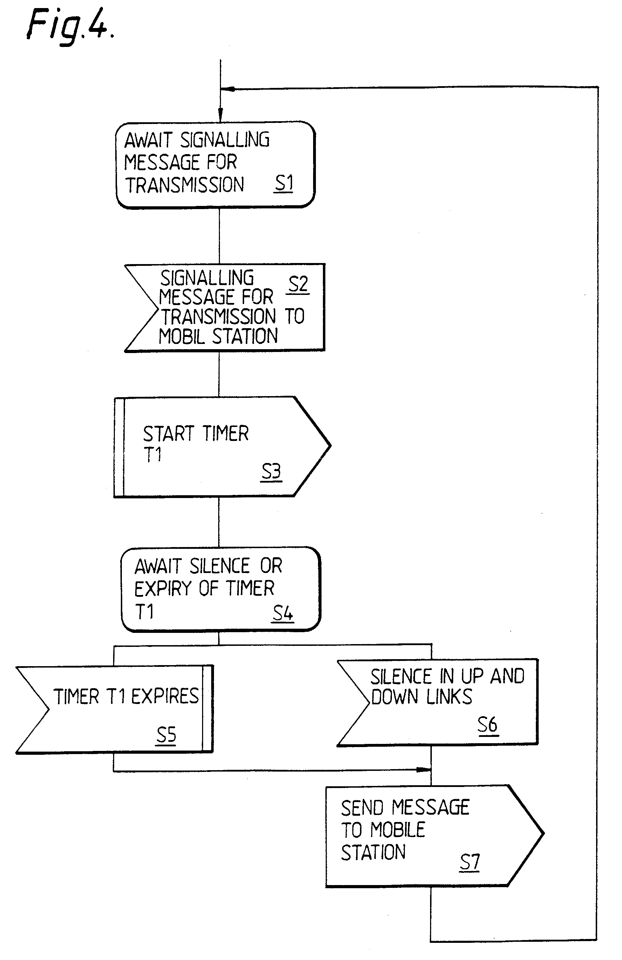

Figure 3 illustrates in schematic terms the implementation of the general principle of the preferred embodiment. The base stations relay not only speech bursts from the network to the mobile stations, but also relay signalling information in signalling bursts. As will be seen in Figure 3, the signalling burst may come to the base station at the same time as a speech burst. The base station retrieves the signalling burst and queues the signalling burst until there is a period of silence, i.e. between speech bursts, in which transmission of the signalling burst can begin. The signalling information has an assessed degree of urgency, e.g. it needs to be transmitted from the base to the mobile within a certain period, even if there is no gap in the speech - for example, if the call is about to fail and handover is necessary. It is therefore arranged to have a timed control of the transmission of the signalling bursts in such circumstances. An example algorithm for this procedure is shown in Figure 4.

Referring to Figure 4, in an initial state with mobile station supported on a traffic channel, the base site controller system is waiting (step S1) for a signalling burst for a mobile to arrive from the network. At some time a signalling message arrives (step S2). At this stage, a timer T1 is started (step S3). The control system then awaits (step S4), a period of silence, i.e. between speech bursts, or expiry of timer T1. Upon the first to occur of the expiry of timer T1 (step S5), or a period of silence in the up and down links (step S6), the signalling message is sent to the mobile (step S7). Thereafter, the control system re-initiates the procedure from step S1. A number of signalling messages could be stored with separate timers operating for each, or one or more timer(s) for a group or groups of messages.

The type and content of the signalling message being handled by the base site controller may affect the described procedure. For example, if the signalling message is a handover command, the base site controller may need to assess whether the message needs to be transmitted immediately to avoid call failure, delayed until a gap in speech occurs, or delayed for a limited period of time - c.f. procedure of Figure 4. Provided the base site controller is furnished with appropriate information, such a decision can properly be taken. Such information may be provided, for example, by a priority code contained in the signalling message itself, which is read by the base site controller.

## Claims

1. A base station (B) for a cellular radio system for voice or data communication with mobile stations (MS) in its vicinity, characterised in having means for determining that communication between the base station (B) and a mobile station (MS) has temporarily ceased, means for assessing the urgency of required signalling information, means for storing the required signalling information while communication continues, and means responsive to the determining means and the assessment means for initiating transmission of the stored required signalling information to the mobile station (MS) on the basis of the assessed degree of urgency of the information, or, if the required signal information has not been transmitted earlier on the basis of the assessed degree of urgency of the signalling information, during a determined temporary cessation in the communication.

2. A cellular radio base station as claimed in Claim 1 wherein the base station (B) has timing means for initiating transmission of a signalling information to a mobile station (MS) a predetermined period after receipt of the message by the base station (B).

3. A cellular radio base station as claimed in Claim 1, wherein the means for assessing the degree of urgency has means for assessing a priority code contained in the signalling message.

4. A cellular radio base station as claimed in Claim 1, wherein the means for assessing the degree of urgency has means for interpreting the signalling message to assess the intended function of the message, so that the urgency of the message may be determined.

5. A base station (B) for a cellular radio system for connection to a mobile switching centre (MSC), so that a mobile station (MS) can make a call to a telephone network via the base station (B) and the mobile switching centre (MSC), characterised in that the base station (B) has means for assessing the urgency of a signalling message sent from the mobile switching centre (MSC) for a mobile station (MS) during a call, means for storing the signalling message, means for assessing the state of communication with the mobile station to be signalled, and means for forwarding the stored signalling message on the basis of the assessed urgency from the base station to the mobile station or, if the signal message has not been sent earlier on the basis of the assessed degree of urgency of the signalling message, during an assessed period of silence in the call.

6. A cellular radio base station as claimed in Claim 5 wherein the base station (B) has timing means for initiating transmission of a signalling message to a mobile station (MS) a predetermined period after receipt of the message by the base station.

7. A cellular radio base station as claimed in Claim 5, wherein the means for assessing the degree of urgency has means for assessing a priority code contained in the signalling message.

8. A cellular radio base station as claimed in Claim 5 wherein the means for assessing the degree of urgency has means for interpreting the signalling message to assess the intended function of the message, so that the urgency of the message may be determined.

9. A cellular radio system having a plurality of base stations, at least one base station (B) being as claimed in any preceding claim.

10. A method of signalling between a base station (B) and a mobile station (MS) in a cellular radio system having a plurality of base stations, each for voice or data communication with mobile stations (MS) in its vicinity, the method characterized by: assessing the urgency of required signalling information; holding required signalling information while voice or data communication continues; determining that communication between the base station (B) and the mobile station (MS) has temporarily ceased; and initiating required signalling with the mobile station (MS) during a determined temporary cessation in the communication, unless the required signalling information has been sent earlier on the basis of the assessed degree of urgency of the required signalling information.

## Patentansprüche

1. Basisstation (B) für ein Zellfunksystem zur Sprach- oder Datenübermittlung mit benachbarten mobilen Stationen (MS), gekennzeichnet durch Einrichtungen, um zu bestimmen, daß die Übermittlung zwischen der Basisstation (B) und einer mobilen Station (MS) vorübergehend unterbrochen ist, Einrichtungen zur Beurteilung der Dringlichkeit der angeforderten Signalinformation, Einrichtungen zur Speicherung der angeforderten Signalinformation, während die Übermittlung weiterläuft, sowie auf die Bestimmungs- und Beurteilungseinrichtungen ansprechende Einrichtungen zur Initiierung der Übermittlung der angeforderten gespeicherten Signalinformation an die mobile Station (MS) auf der Grundlage des beurteilten Dringlichkeitsgrades der Information oder, wenn die angeforderte Signal information nicht vorher auf der Grundlage des beurteilten Dringlichkeitsgrades der Signalinformation übermittelt worden ist, während einer bestimmten temporären Übermittlungsunterbrechung.

2. Zellfunksystem nach Anspruch 1, bei welchem die Basisstation (B) Zeitgeber aufweist, um die Übermittlung einer Signal information an eine mobile Station (MS) eine vorbestimmte Zeitspanne nach Erhalt der Nachricht durch die Basisstation (B) zu initiieren.

3. Zellfunksystem nach Anspruch 1, bei welchem die Einrichtung zur Beurteilung des Dringlichkeitsgrades Einrichtungen zur Beurteilung des in der Signalnachricht enthaltenen Prioritätscodes aufweist.

4. Zellfunksystem nach Anspruch 1, bei welchem die Einrichtung zur Beurteilung des Dringlichkeitsgrades Einrichtungen zur Interpretierung der Signalnachricht aufweist, um die beabsichtigte Funktion der Nachricht zur Bestimmung der Dringlichkeit derselben beurteilen zu können.

5. Basisstation (B) für ein Zellfunksystem zur Verbindung mit einem mobilen Schaltzentrum (MSC), damit eine mobile Station (MS) über die Basisstation (B) und das mobile Schaltzentrum (MSC) einen Anruf tätigen kann, dadurch gekennzeichnet, daß die Basisstation (B) Einrichtungen zur Beurteilung der Dringlichkeit einer Signalnachricht aufweist, die während eines Anrufs von dem mobilen Schaltzentrum (MSC) an eine mobile Station (MS) ergangen ist, Einrichtungen zur Speicherung der Signal nachricht, Einrichtungen zur Beurteilung des Standes der in Signalform zu übermittelnden Nachricht an die mobile Station, sowie Einrichtungen zur Weiterleitung der gespeicherten Signalnachricht auf der Grundlage des beurteilten Dringlichkeitsgrades von der Basisstation an die mobile Station oder, wenn die Signal nachricht nicht vorher auf der Grundlage des beurteilten Dringlichkeitsgrades derselben übertragen worden ist, während einer beurteilten Zeitspanne der Übermittlungsstille während des Anrufs.

6. Zellfunk-Basisstation nach Anspruch 5, bei der die Basisstation (B) Zeitgeber aufweist, um die Übermittlung einer Signalnachricht an eine mobile Station (MS) eine vorbestimmte Zeitspanne nach Erhalt der Nachricht durch die Basistation zu initiieren.

7. Zellfunk-Basisstation nach Anspruch 5, bei der die Einrichtung zur Beurteilung des Dringlichkeitsgrades Einrichtungen zur Beurteilung des in der Signalnachricht enthaltenen Prioritätscodes aufweist.

8. Zellfunk-Basisstation nach Anspruch 5, bei der die Einrichtungen zur Beurteilung des Dringlichkeitsgrades Einrichtungen zur Interpretierung der Signalnachricht aufweist, um die beabsichtigte Funktion der Nachricht im Hinblick auf die Bestimmung der Dringlichkeit derselben zu beurteilen.

9. Zellfunksystem mit mehreren Basisstationen, wobei mindestens eine Basisstation (B) gemäß den vorangehenden Ansprüchen vorliegt.

10. Verfahren zur Signalübermittlung zwischen einer Basisstation (B) und einer mobilen Station (MS) in einem Zellfunksystem mit mehreren Basisstationen, jeweils für die Sprach- oder Datenübermittlung, mit benachbarten mobilen Stationen (MS), gekennzeichnet durch:
- Beurteilen der Dringlichkeit der angeforderten Signalinformation,
- Halten der angeforderten Signalinformation, während die Sprach- und Datenübermittlung weiterläuft,
- Bestimmen, daß die Übermittlung zwischen der Basisstation (B) und der mobilen Station (MS) vorübergehend unterbrochen ist, und
- Initiieren der angeforderten Signalübermittlung an die mobile Station (MS) während einer bestimmten temporären Unterbrechung der Übermittlung, es sei denn, die angeforderte Signalinformation ist vorher auf der Grundlage des beurteilten Dringlichkeitsgrades derselben übermittelt worden.

## Revendications

1. Station de base (B) d'un système radio cellulaire, destinée à des communications vocales ou de données avec des stations mobiles (MS) à sa proximité, caractérisée en ce qu'elle comporte un moyen destiné à déterminer qu'une communication entre la station de base (B) et une station mobile (MS) a temporairement cessé, un moyen destiné à estimer l'urgence des informations d'échange de signaux requis, un moyen destiné à mémoriser les informations d'échange de signaux requis pendant que la communication se poursuit, et un moyen répondant au moyen de détermination et au moyen d'estimation afin d'initier la transmission des informations d'échange de signaux requis mémorisées vers la station mobile (MS) sur la base du degré d'urgence estimé des informations, ou, si les informations de signaux requis n'ont pas été transmises précédemment, sur la base du degré d'urgence estimé des informations d'échange de signaux, pendant une cessation temporaire déterminée de la communication.

2. Station de base pour radio cellulaire selon la revendication 1, dans laquelle la station de base (B) comporte un moyen de temporisation destiné à initier la transmission des informations d'échange de signaux vers une station mobile (MS), un intervalle de temps prédéterminé après la réception du message par la station de base (B).

3. Station de base pour radio cellulaire selon la revendication 1, dans laquelle le moyen destiné à estimer le degré d'urgence comporte un moyen destiné à estimer un code de priorité contenu dans le message d'échange de signaux.

4. Station de base pour radio cellulaire selon la revendication 1, dans laquelle le moyen destiné à estimer le degré d'urgence comporte un moyen destiné à interpréter le message d'échange de signaux pour estimer la fonction prévue du message, de sorte que l'urgence du message peut être définie.

5. Station de base (B) d'un système radio cellulaire, destinée à la connexion avec un centre de commutation de mobiles (MSC), de sorte qu'une station mobile (MS) puisse effectuer un appel vers un réseau téléphonique par l'intermédiaire de la station de base (B) et du centre de commutation de mobiles (MSC), caractérisé en ce que la station de base (B) comporte un moyen destiné à estimer l'urgence d'un message d'échange de signaux émis à partir du centre de commutation de mobiles (MSC) pour une station mobile (MS) pendant un appel, un moyen destiné à mémoriser le message d'échange de signaux, un moyen destiné à estimer l'état d'une communication avec la station mobile avec laquelle on échange des signaux, et un moyen destiné à propager le message d'échange de signaux mémorisé sur la base de l'urgence estimée à partir de la station de base vers la station mobile ou, si le message de signaux n'a pas été émis précédemment, sur la base du degré d'urgence estimé du message d'échange de signaux, pendant une période de silence estimée au cours de l'appel.

6. Station de base pour radio cellulaire selon la revendication 5, dans laquelle la station de base (B) comporte un moyen de temporisation destiné à initier la transmission d'un message d'échange de signaux vers une station mobile (MS), un intervalle de temps prédéterminé après la réception du message par la station de base.

7. Station de base pour radio cellulaire selon la revendication 5, dans laquelle le moyen destiné à estimer le degré d'urgence comporte un moyen destiné à estimer un code de priorité contenu dans le message d'échange de signaux.

8. Station de base pour radio cellulaire selon la revendication 5, dans laquelle le moyen destiné à estimer le degré d'urgence comporte un moyen destiné à interpréter le message d'échange de signaux afin d'estimer la fonction prévue du message, de sorte que l'urgence du message peut être définie.

9. Système radio cellulaire comportant une pluralité de stations de base, au moins l'une des stations de base (B) étant selon l'une quelconque des revendications précédentes.

10. Procédé d'échange de signaux entre une station de base (B) et une station mobile (MS) dans un système radio cellulaire comportant une pluralité de stations de base, chacune étant destinée à des communications vocales ou de données avec des stations mobiles (MS) à sa proximité, le procédé étant caractérisé par les étapes consistant à : estimer l'urgence des informations d'échange de signaux requis, conserver les informations d'échange de signaux requis pendant qu'une communication vocale ou de données se poursuit, déterminer qu'une communication entre la station de base (B) et la station mobile (MS) a temporairement cessé, et initier l'échange de signaux requis avec la station mobile (MS) pendant une cessation temporaire déterminée de la communication, sauf si les informations d'échange de signaux requis ont été émises précédemment, sur la base du degré d'urgence estimé des informations d'échange de signaux requis.
